# EUROPEAN PATENT SPECIFICATION

(11) **EP 3 832 493 B1**
(45) Date of publication and mention of the grant of the patent: **19.07.2023**
(21) Application number: 20166721.9
(22) Date of filing: 30.03.2020
(51) Int. Cl.: G06F 16/901

(54) **METHOD, APPARATUS, ELECTRONIC DEVICE AND READABLE STORAGE MEDIUM FOR DATA QUERY**
VERFAHREN, GERÄT, ELEKTRONISCHE VORRICHTUNG UND LESBARES SPEICHERMEDIUM ZUR DATENABFRAGE
PROCÉDÉ, APPAREIL, DISPOSITIF ÉLECTRONIQUE ET SUPPORT D'ENREGISTREMENT LISIBLE PAR ORDINATEUR POUR DEMANDE DE DONNÉES

(30) Priority: 05.12.2019 CN 201911235112
(43) Date of publication of application: 09.06.2021
(73) Proprietor: BEIJING BAIDU NETCOM SCIENCE AND TECHNOLOGY CO., LTD., Beijing 100185 (CN)
(72) Inventor: YANG, Wenbo, Beijing, Beijing 100085 (CN)
(74) Representative: dompatent von Kreisler Selting Werner - Partnerschaft von Patent- und Rechtsanwälten mbB

(56) References cited:
- CN-B- 104 536 958
- US-A1- 2015 074 372

## Description

### Field of the Disclosure

The present disclosure relates to computer technologies, specifically to information retrieval technologies, and particularly to a method, apparatus, electronic device and readable storage medium for data query.

### Background of the Disclosure

The era of cloud computing comes, and information grows explosively. Faced with massive data, an information retrieval system relies on index data to quickly look up data. A hash table directly accesses a data table at a memory storage location according to keys, and it accesses data by mapping desired data to a position in the hash table through a function of keys. Such a mapping function is referred to as a hash function. A separate chaining hash table is a hash table using an extra separate chaining structure to solve a hash conflict.

What are stored in a conventional separate chaining hash table are keys. When data query is performed, the key data stored in the separate chaining structure of the separate chaining hash table need to be sequentially looked up one by one, and the query efficiency is low.

### Summary of the Disclosure

A plurality of aspects of the present disclosure provide a method, apparatus, electronic device and readable storage medium for data query, for improving the lookup efficiency and speed of the separate chaining hash table and saving the costs.

### Brief Description of Drawings

In order to more clearly illustrate the technical solutions in the embodiments of the present disclosure, figures to be used for describing the embodiments or the prior art will be briefly introduced below. Obviously, the figures described below illustrate some embodiments of the present disclosure. Those having ordinary skilled in the art appreciate that other figures may be obtained according to these figures without making any inventive efforts. The figures are only used to facilitate better understanding of the technical solutions and cannot be construed as limiting the present disclosure. In the figures:
FIG. 1 is a flowchart of a data query method according to an embodiment of the present disclosure;
FIG. 2 is a schematic diagram of a storage structure of a hash table according to an embodiment of the present disclosure;
FIG. 3 is a schematic diagram of a storage structure of a hash table according to another embodiment of the present disclosure;
FIG. 4 is a schematic diagram of a storage structure of a hash table according to a further embodiment of the present disclosure;
FIG. 5 is a flowchart of a data query method according to another embodiment of the present disclosure;
FIG. 6 is a schematic structural diagram of a data query apparatus according to an embodiment of the present disclosure;
FIG. 7 is a schematic structural diagram of a data query apparatus according to another embodiment of the present disclosure;
FIG. 8 is a schematic structural diagram of a data query apparatus according to a further embodiment of the present disclosure;
FIG. 9 is a schematic diagram of an electronic device for implementing a data query method according to an embodiment of the present disclosure.

### Detailed Description of Preferred Embodiments

Embodiments of the present disclosure are described below with reference to the accompanying drawings, include various details of the embodiments of the present disclosure.

It needs to be appreciated that the terminal involved in the embodiments of the present disclosure comprises but is not limited to a mobile phone, a Personal Digital Assistant (PDA), a wireless handheld device, a Tablet Computer, a Personal Computer (PC), a MP3 player, a MP4 player, a wearable device (e.g., smart glasses, a smart watch, a smart bracelet, etc.), a smart home device (e.g., a smart speaker device, a smart TV set, a smart air conditioner, etc.), etc.

In addition, it should be appreciated that the term "and/or" used in the text herein is only an association relationship depicting associated objects and represents that three relations might exist, for example, A and/or B may represents three cases, namely, A exists individually, both A and B coexist, and B exists individually. In addition, the symbol "/" in the text generally indicates that associated objects before and after the symbol are in an "or" relationship.

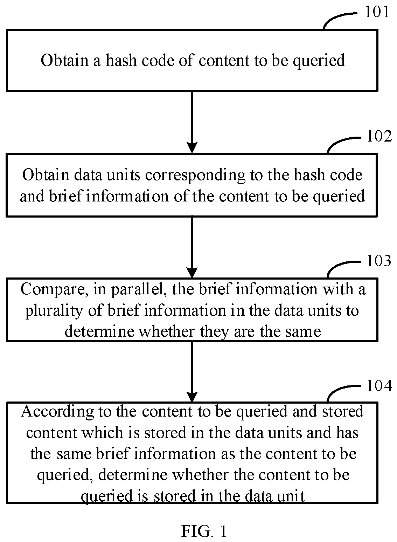

FIG. 1 is a flowchart of a data query method according to an embodiment of the present disclosure. As shown in FIG. 1, the method comprise the following steps:
101: obtaining a hash code (also referred to as a hash address) of content to be queried. Optionally, in a possible implementation of the present embodiment, a preset hash algorithm may be employed to perform a hash calculation for the content to be queried, to obtain a hash code of the content to be queried. The hash algorithm in the embodiment of the present disclosure may be any hash function, e.g., may include but not limited to a function corresponding to a direct addressing method, a middle-square method, a remainder method or a random number method. This is not particularly limited in the present embodiment.
102: obtaining data units corresponding to the hash code and brief information of the content to be queried.
103: comparing, in parallel, the brief information with a plurality of brief information in the data units to determine whether they are the same.
104: according to the content to be queried and stored content which is stored in the data units and has the same brief information as the content to be queried, determining whether the content to be queried is stored in the data unit.

If the content to be queried is the same as the stored content which is stored in the data units and has the same brief information as the content to be queried, this indicates that the content to be queried is found from the data unit; if the content to be queried is different from the stored content which is stored in the data units and has the same brief information as the content to be queried, this indicates that the content to be queried is not found from the data unit, and a query result message about failure to determine the content to be queried may be returned, or no message may be returned.

It needs to be appreciated that a subject for implementing 101-104 may be an application located at a local terminal, or be a function unit such as a plug-in or Software Development Kit (SDK) arranged in the application located at the local terminal, or be a processing engine located in a network-side server, or be a distributed system located on the network side, for example, a processing engine or a distributed system in a search server on the network side. This is not particularly limited in the present embodiment.

It may be understood that the application may be a native application (nativeAPP) installed on the terminal, or a web application (webAPP) of a browser on the terminal. This is not limited in the present embodiment.

As such, after the data units corresponding to the hash code and the brief information of the content to be queried are obtained, the brief information is compared one time in parallel with plurality of brief information in the data units to determine whether they are the same. When there is the same brief information as the brief information of the content to be queried in the data unit, determination is made as to whether the content to be queried is stored in the data units according to the determination of whether the content to be queried is the same as the stored content which exists in the data units and has the same brief information as the content to be queried. The lookup efficiency and speed are improved in the parallel query manner. When query is made for keys in the separate chaining hash table according to the embodiment of the present disclosure, it is unnecessary to perform costly one-by-one sequential lookup and content matching for the separate chaining structure, thereby improving the lookup efficiency and speed and saving the costs.

Optionally, in a possible implementation of the present embodiment, the content to be queried in 101 and the stored content in 103 are a key respectively, the data units are hash buckets in the separate chaining hash table, each separate chaining hash table includes one or more hash buckets, and each of the hash buckets is used to store the keys having the same hash code and their brief information. Specifically, each of the hash buckets includes a data block (kv_pair[]) and a brief information sequence, the data block is used to store the keys having the same hash code, and the brief information sequence includes the brief information respectively corresponding to respective stored contents in the data block of the same data unit. Correspondingly, at 103, the brief information are compared in parallel with a plurality of brief information in the brief information sequence to determine whether they are the same.

The data block in the hash bucket may be implemented by a structure such as a linked list or a tree. Optionally, in a possible implementation of the present embodiment, the data structure of the data block for example includes but not limited to any of the following: any traverseable data structure such as listed link, dynamic array, static array, skip list, queue, stack, tree, graph and hash table. This is not particularly limited in the present embodiment. When the data block is implemented using a linked list structure, the data block may also referred to as a singly-linked list.

When the data block employs a separate chaining data structure such as a dynamic array that supports the random access, after the hash mask is successfully matched, most data elements that needn't be compared may be skipped, which saves the comparing and computing resources and costs.

The brief information sequence is implemented with an array structure, which may be referred to as a hash mask array (mask[]), and correspondingly, each piece of brief information in the brief information sequence is taken as an element in the array, which may be referred to as a hash mask (mask[i]). The specific implementation of the brief information is not particularly limited in the present embodiment.

Optionally, in a possible implementation of the present embodiment, if there is the same brief information as the brief information of the key to be queried in the brief information sequence according to the comparison result of 103, the key of the same brief information is compared with the key to be queried to determine whether they are the same in 104. If the key of the same brief information is the same as the key to be queried, it is determined that the key to be queried is stored in the separate chaining hash table. Conversely, if there is not the same element as the brief information of the key to be queried in the brief information sequence according to the comparison result of 103, 104 will not be performed, namely, the key of the same brief information will not be compared with the key to be queried to determine whether they are the same in 104, and it is unnecessary to perform costly one-by-one sequential lookup and key matching for the separate chaining structure, thereby saving the costs.

Optionally, in a possible implementation of the present embodiment, in 101, a preset hash algorithm may be employed to perform a hash calculation for the key to be queried, to obtain a hash code of the key to be queried. In 102, the hash bucket corresponding to the hash code and the brief information of the key to be queried may be obtained based on the preset hash algorithm and the key to be queried.

As such, the hash code of the key to be queried and corresponding hash bucket, and the brief information of the key to be queried are obtained based on the same hash algorithm and the key to be queried, which can save the computing resources and improving the computing efficiency.

In a possible implementation of the present embodiment, the hash code may be used to modulo a total number of hash buckets included in the separate chaining hash table to obtain a bucket ID of the hash bucket corresponding to the hash code to obtain the hash bucket identified by the bucket ID. The bucket ID may be referred to as a bucket serial number for solely identifying a bucket in the separate chaining table. This is not particularly limited in the present embodiment.

In the implementation of the present disclosure, high N bits of the hash code are taken as the brief information of the hash code, where N is an integer greater than 0. For example, the value of N may be 8, i.e., the high 8 bits of the hash code is taken as the brief information of the key to be queried.

For example, the hash algorithm may be first used to perform hash calculation for the key to be queried, to obtain a 64-bit hash code. The hash code is used to modulo the total number 128 of the hash buckets to obtain the bucket ID. The high 8 bits of the hash code is taken as the brief information of the key to be queried.

According to this implementation in 103, an SIMD instruction is used to compare, in parallel, the brief information of the key to be queried with the plurality of brief information in the brief information sequence in the corresponding hash bucket to determine whether they are the same.

In the present solution, the SIMD instruction is used to compare, in parallel, the brief information of the key to be queried with the plurality of brief information in the brief information sequence in the corresponding hash bucket to determine whether they are the same. In this way, the parallel computing capability of the SIMD instruction can be sufficiently used, and the lookup efficiency and speed of the separate chaining structure be improved.

Optionally, in a possible implementation of the present embodiment, the size of the brief information sequence is an integer multiple of 8, for example, 8, 16, 32 and so on are an integer multiple of 8. This is not particularly limited in the present embodiment.

Optionally, in a possible implementation of the present embodiment, the size of elements (namely, brief information) in the brief information sequence may be one byte to make full use of the parallel computing capability of the SIMD instruction.

As such, the parallel computing capability of the SIMD instruction can be further used sufficiently, the computing resources be saved, and the computing efficiency be improved.

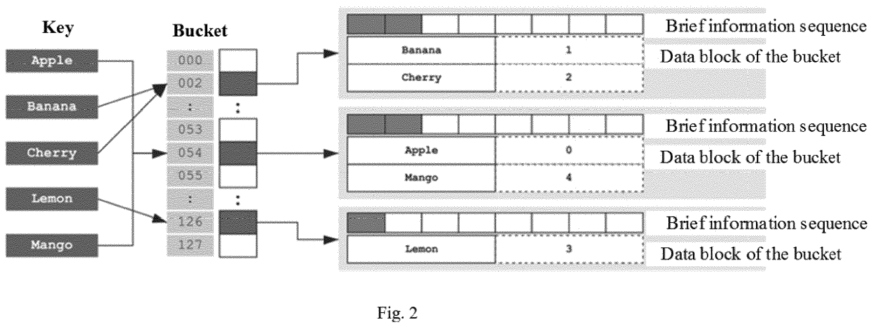

FIG. 2 is a schematic diagram of a storage structure of a hash table according to an embodiment of the present disclosure. As shown in FIG. 2, it shows a storage structure of a hash table of exemplary content, wherein 000, 001, ..., 0128 are buckets IDs of the hash buckets.

Optionally, in a possible implementation of the present embodiment, the hash bucket may further comprises a data block pointer. The data block pointers, the data blocks and the brief information sequences of any L hash buckets in the separate chaining hash table are respectively merged and stored correspondingly, thereby reducing the storage overhead and improving the storage efficiency. A value of L is an integer greater than 0 and less than the total number M of the hash buckets included in the separate chaining hash table.

Based on the separate chaining hash table structure according to the present embodiment, partial chains (including the data block pointers, the data blocks and the brief information sequences) may be respectively merged together to reduce the storage overhead and improve the storage efficiency. When the chain is too long, it is split. Mainly because the matching of the brief information has a higher tolerance to the increase of hash conflicts, the computing complexity for the brief information matching is the same when the number of elements in the brief information sequence is 1 or 8. Therefore, the merge of partial chains (including the data block pointers, the data blocks and the brief information sequences) does not exert a large impact on the query performance, and the storage efficiency may be improved by chain merging and dynamic splitting.

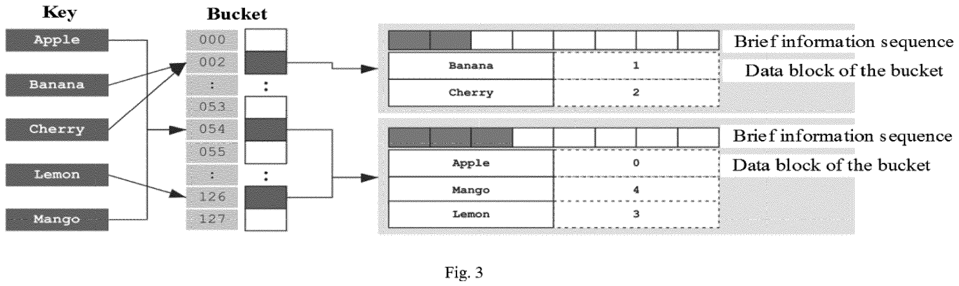

FIG. 3 is a schematic diagram of a storage structure of a hash table according to another embodiment of the present disclosure. As shown in FIG. 3, the data block pointers, data blocks and brief information sequences of the two buckets having bucket IDs 054 and 126 in FIG. 2 are respectively merged and stored correspondingly.

When data needn't be added to, deleted from or amended in the above separate chaining hash table any more, the separate chaining hash table may be set as a read-only separate chaining hash table, and the read-only separate chaining hash tables may be merged into a more compact data structure.

Optionally, in a possible implementation of the present embodiment, the separate chaining hash table is a read-only separate chaining hash table, and the hash bucket further comprises a data block index. The data blocks and brief information sequences of all hash buckets in the read-only separate chaining hash table are respectively merged correspondingly into a data block and a brief information sequence stored in fixed-size blocks and in a sequence manner.

As such, it is possible to further reduce the storage space to be used, and greatly improve the storage efficiency. Furthermore, due to existence of limitations, the CPU cache can be used sufficiently, and the access performance can be enhanced after the merge and storage;

Secondly, after the data blocks and brief information sequences are respectively merged into a data block and a brief information sequence stored in fixed-size blocks and in a sequence manner, the hash buckets needn't store the data block pointers and only store the corresponding block index. The storage space for storing the data blocks is smaller than the storage space for storing the data block pointers. For example, on a common 64-bit platform, the data blocks in each bucket need a 8-byte storage space, whereas only a one-bit storage space is needed to store the block index when the number of buckets is less than 256. Therefore, the storage space used by the hash buckets can be substantially reduced.

In addition, the chaining size of each bucket loses after the data blocks and brief information sequences are respectively merged into the data block and the brief information sequence stored in fixed-size blocks and in a sequence manner, since the parallel computing capability of the SIMD instruction is used sufficiently, the lookup cost in the data blocks based on the brief information sequence is very low; when the query goes from the data block of the current bucket to the data block of next bucket, the computing cost consumed under the SIMD instruction is not high, and the waste of auxiliary data structures may be sufficiently reduced.

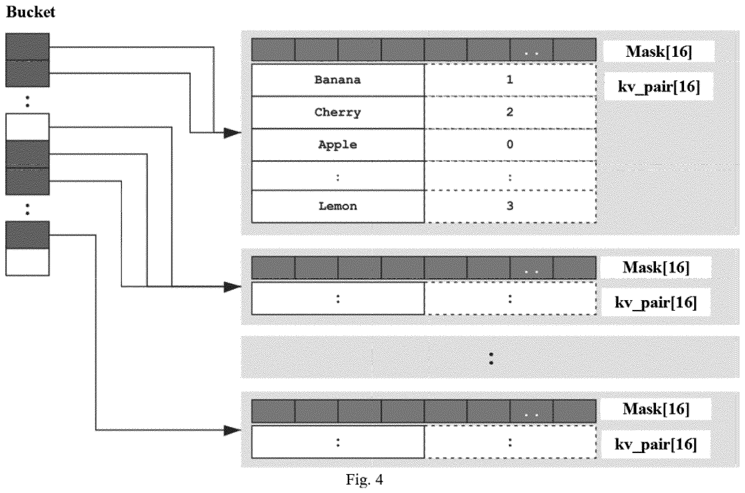

FIG. 4 is a schematic diagram of a storage structure of a hash table according to a further embodiment of the present disclosure. As shown in FIG. 4, the data blocks and brief information sequences of all hash buckets in the read-only separate chaining hash table are respectively merged correspondingly into a block data kv_pair[16] and a brief information sequence mask[16] having a size 16 and stored in a sequence manner.

Optionally, in a possible implementation of the present embodiment, regarding the read-only separate chaining hash table, at 103, it is specifically possible to select a preset number of brief information in the brief information sequence in the corresponding hash bucket as the current brief information, e.g., use the SIMD instruction to compare the brief information of the key to be queried with the current brief information in parallel to determine whether they are the same; if there is not the same element as the brief information of the key to be queried in the current brief information, select a next preset number of brief information from the brief information sequence in the corresponding hash bucket as the current brief information, and perform the operation of comparing the brief information of the key to be queried with the current brief information in parallel to determine whether they are the same, until there is the same brief information as the brief information in the current brief information,or next hash bucket of the corresponding hash bucket is read, namely, the actual query range is [the data block of the current bucket, the data block of next bucket].

The data structures of the data blocks in the examples shown in FIG. 2 through FIG. 4 employ a dynamic array. However, those skilled in the art may know that the data blocks may be implemented with other data structures based on the disclosure of the embodiments of the present disclosure. This is not described in detail any more in the embodiments of the present disclosure.

Optionally, in a possible implementation of the present embodiment, the brief information sequence in the hash bucket may be stored in a first storage unit, and the data block in the hash bucket be stored in a second storage unit.

As such, the brief information sequence and the data block are stored in grades. The brief information sequence is stored in the first storage unit, e.g., in a memory having a quicker access speed, and the data block is stored in the second storage unit, e.g., in a hard drive or a Solid State Drive (SSD). This can reduce the storage cost while ensuring the query performance.

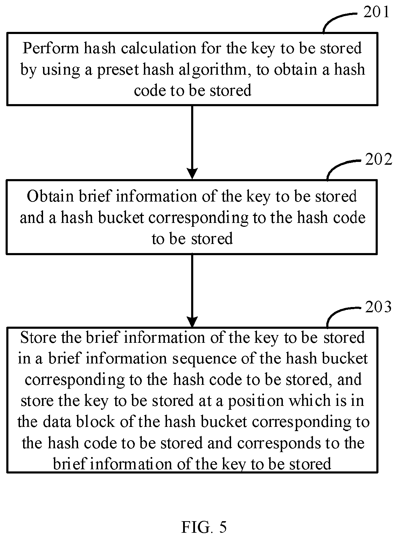

FIG. 5 is a flowchart of a data query method according to another embodiment of the present disclosure. As shown in FIG. 5, on the basis of the above embodiments, the data query method may further comprise:
201: performing hash calculation for the key to be stored by using a preset hash algorithm, to obtain a hash code to be stored.
202: obtaining brief information of the key to be stored and a hash bucket corresponding to the hash code to be stored.
203: storing the brief information of the key to be stored in a brief information sequence of the hash bucket corresponding to the hash code to be stored, and storing the key to be stored at a position which is in the data block of the hash bucket corresponding to the hash code to be stored and corresponds to the brief information of the key to be stored.

As such, the storage of the key to be stored and its brief information is achieved to facilitate subsequent query.

In the technical solution according to the present disclosure, after the data units corresponding to the hash code and the brief information of the content to be queried are obtained, the brief information is compared one time in parallel with plurality of brief information in the data units to determine whether they are the same. When there is the same brief information as the brief information of the content to be queried in the data unit, determination is made as to whether the content to be queried is stored in the data units according to the determination of whether the content to be queried is the same as the stored content of the same brief information existing in the data unit. The lookup efficiency and speed are improved in the parallel query manner. When query is made for keys in the separate chaining hash table according to the embodiment of the present disclosure, it is unnecessary to perform costly one-by-one sequential lookup and content matching for the separate chaining structure, thereby improving the lookup efficiency and speed and saving the costs.

In addition, according to the technical solution provided by the present disclosure, the efficiency and speed of looking up the keys in the separate chaining hash table are improved in the parallel query manner by adding each of the hash buckets of the separate chaining hash table a brief information sequence, including the brief information respectively corresponding to the keys in the data block of the hash bucket, and it is unnecessary to perform costly one-by-one sequential lookup and content matching for the separate chaining structure, thereby saving the costs.

In addition, with the technical solution according to the present disclosure being employed, the hash code and corresponding hash bucket and brief information are obtained based on the same hash algorithm and the key to be queried, which can save the computing resources and improving the computing efficiency.

In addition, according to the technical solution provided by the present disclosure, a Single Instruction Multiple Data (SIMD) instruction is used to compare in parallel the brief information of the hash code and the plurality of brief information in the brief information sequence in the corresponding hash bucket to determine whether they are the same, and the parallel computing capability of the SIMD instruction is sufficiently used to improve the lookup efficiency and speed of the separate chaining structure.

In addition, according to the technical solution provided by the present disclosure, the size of the brief information sequence is an integer multiple of 8, and the size of the respective brief information in the brief information sequence is one byte, so that it is possible to further make full of the parallel computing capability of the SIMD instruction, save the computing resources and improve the computing efficiency.

In addition, according to the technical solution provided by the present disclosure, the data block pointers, the data blocks and the brief information sequences in any L hash buckets in the separate chaining hash table are respectively merged and stored correspondingly, thereby reducing the storage overhead and improving the storage efficiency.

In addition, according to the technical solution provided by the present disclosure, regarding the read-only separate chaining hash table, the hash bucket further comprises a data block index. The data blocks and brief information sequences of all hash buckets in the read-only separate chaining hash table are respectively merged correspondingly into a data block and a brief information sequence stored in fixed-size blocks and in a sequence manner, which can further reduce the storage space to be used, and greatly improve the storage efficiency.

In addition, according to the technical solution provided by the present disclosure, the brief information sequence and the data block are stored in grades. The brief information sequence in the hash bucket is stored in the first storage unit, and the data block in the hash bucket is stored in the second storage unit. This can reduce the storage cost while ensuring the query performance.

In addition, according to the technical solution provided by the present disclosure, after the data of the hash buckets are merged, the separate chaining hash table has a stable performance at a low conflict rate and a high conflict rate in a certain range (an average conflict rate does not exceed the width of a parallel instruction such as the SIMD instruction), and the storage space of the hash buckets may be saved sufficiently.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

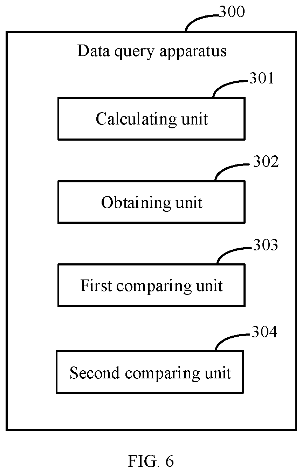

FIG. 6 is a schematic structural diagram of a data query apparatus according to an embodiment of the present disclosure. As shown in FIG. 6, the data query apparatus 300 according to the present embodiment may comprise a calculating unit 301, an obtaining unit 302, a first comparing unit 303 and a second comparing unit 304. The calculating unit 301 is configured to obtain a hash code of content to be queried; the obtaining unit 302 is configured to obtain data units corresponding to the hash code and brief information of the content to be queried, wherein each of the data units is used to store content having a same hash code; the first comparing unit 303 is configured to comparing, in parallel, the brief information with a plurality of brief information in the data units to determine whether they are the same; the second comparing unit 304 is configured to, according to the content to be queried and stored content which is stored in the data units and has the same brief information as the content to be queried, determine whether the content to be queried is stored in the data unit.

It needs to be appreciated that part or all of a subject for performing the data query apparatus according to the present embodiment may be an application located at a local terminal, or be a function unit such as a plug-in or Software Development Kit (SDK) arranged in the application located at the local terminal, or be a processing engine located in a network-side server, or be a distributed system located on the network side, for example, a processing engine or a distributed system in a search server on the network side. This is not particularly limited in the present embodiment.

It may be understood that the application may be a native application (nativeAPP) installed on the terminal, or a web application (webAPP) of a browser on the terminal. This is not limited in the present embodiment.

Optionally, in a possible implementation of the present embodiment, the content to be queried in and the stored content are a key respectively; the data unit are hash buckets in the separate chaining hash table; each of the hash buckets includes a data block and a brief information sequence, and the brief information sequence includes the brief information respectively corresponding to respective stored contents in the data block.

Optionally, in a possible implementation of the present embodiment, the obtaining unit 302 obtains the hash bucket corresponding to the hash code and the brief information of the key to be queried, based on the key to be queried and a preset hash algorithm employed to obtain the hash code of the key to be queried.

Optionally, in a possible implementation of the present embodiment, the obtaining unit 302 is specifically configured to use the hash code to modulo a total number of hash buckets included in the separate chaining hash table to obtain a bucket ID of the hash bucket corresponding to the hash code to obtain the hash bucket identified by the bucket ID.

Optionally, in a possible implementation of the present embodiment, the obtaining unit 302 is specifically configured to take high N bits of the hash code as the brief information of the key to be queried, where N is an integer greater than 0.

Optionally, in a possible implementation of the present embodiment, the first comparing unit 303 is specifically configured to use a Single Instruction Multiple Data (SIMD) instruction to compare, in parallel, the brief information of the key to be queried with the plurality of brief information in the brief information sequence to determine whether they are the same.

Optionally, in a possible implementation of the present embodiment, the size of the brief information sequence is an integer multiple of 8; the size of elements in the brief information sequence is one byte.

Optionally, in a possible implementation of the present embodiment, the data structure of the data block comprises any of the following: listed link, dynamic array, static array, skip list, queue, stack, tree, graph and hash table.

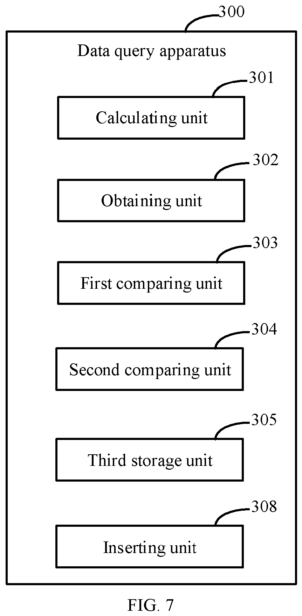

FIG. 7 is a schematic structural diagram of a data query apparatus according to another embodiment of the present disclosure. As shown in FIG. 7, on the basis of the above embodiment, the data query apparatus may further comprise: a third storage unit 305 configured to store the separate chaining hash table.

Optionally, in a possible implementation of the present embodiment, the data unit further comprises a data block pointer; the data block pointers, the data blocks and the brief information sequences of any L hash buckets in the separate chaining hash table are respectively merged and stored correspondingly in the third storage unit, where a value of L is an integer greater than 0 and less than the total number M of the hash buckets included in the separate chaining hash table.

Optionally, in another possible implementation of the present embodiment, the separate chaining hash table is a read-only separate chaining hash table, and the hash bucket further comprises a data block index;
the data blocks and brief information sequences of all hash buckets in the read-only separate chaining hash table are respectively merged correspondingly into a data block and a brief information sequence which are stored in fixed-size blocks and in a sequence manner and are stored in the third storage unit.

Optionally, in a possible implementation of the present embodiment, the first comparing unit 303 selects a preset number of brief information in the brief information sequence in the corresponding hash bucket as the current brief information, and compares the brief information of the key to be queried with the current brief information in parallel to determine whether they are the same; if there is not the same element as the brief information of the key to be queried in the current brief information, selects a next preset number of brief information from the brief information sequence in the corresponding hash bucket as the current brief information, and performs the operation of comparing the brief information of the key to be queried with the current brief information in parallel to determine whether they are the same, until there is the same brief information as the brief information of the key to be queried, or next hash bucket of the corresponding hash bucket is read.

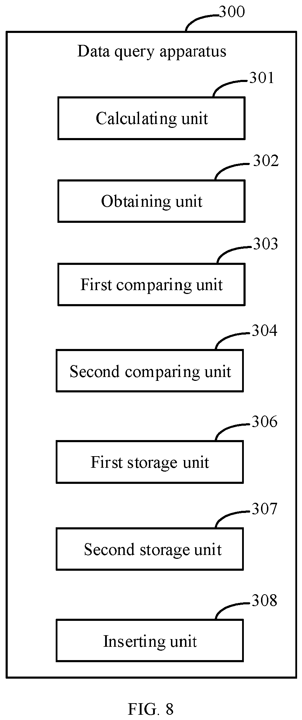

FIG. 8 is a schematic structural diagram of a data query apparatus according to a further embodiment of the present disclosure. As shown in FIG. 8, on the basis of the above embodiment shown in FIG. 5, the data query apparatus may further comprise: a third storage unit 306 for storing the brief information sequence; a second storage unit 307 for storing the data block.

Optionally, in a possible implementation of the present embodiment, the calculating unit 301 is further configured to perform hash calculation for the key to be stored by using a preset hash algorithm, to obtain a hash code to be stored; the obtaining unit 302 is further configured to obtain brief information of the key to be stored and a hash bucket corresponding to the hash code to be stored. Referring to FIG. 6 or FIG. 7 again, the data query apparatus may further comprise: an inserting unit 308 configured to store the brief information of the key to be stored in a brief information sequence of the hash bucket corresponding to the hash code to be stored, and store the key to be stored at a position which is in the data block of the hash bucket corresponding to the hash code to be stored and corresponds to the brief information of the key to be stored.

According to an embodiment of the present disclosure, the present disclosure further provides an electronic device and a non-transitory computer-readable storage medium storing computer instructions therein.

The electronic device according to an embodiment comprises:
at least one processor; and
a memory communicatively connected with the at least one processor; wherein,
the memory stores instructions executable by the at least one processor, and the instructions are executed by the at least one processor to enable the at least one processor to perform the method according to any of the above embodiments.

In a non-transitory computer-readable storage medium storing computer instructions therein according to an embodiment, the computer instructions are used to cause the computer to perform the method according to any of the above embodiments.

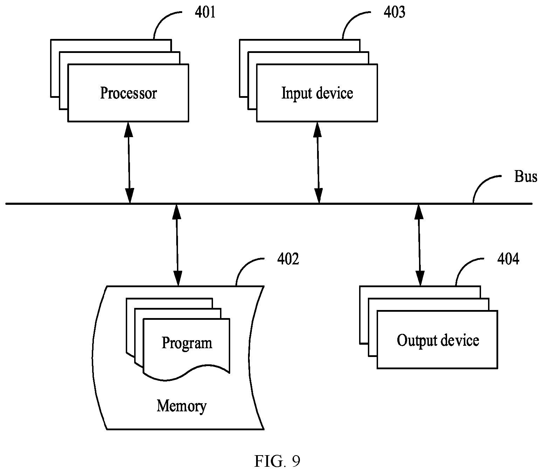

As shown in FIG. 9, it shows a schematic diagram of an electronic device for implementing a data query method according to an embodiment of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 9, the electronic device comprises: one or more processors 401, a memory 402, and interfaces connected to components and including a high-speed interface and a low speed interface. Each of the components are interconnected using various busses, and may be mounted on a common motherboard or in other manners as appropriate. The processor can process instructions for execution within the electronic device, including instructions stored in the memory or on the storage device to display graphical information for a GUI on an external input/output device, such as display coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 401 is taken as an example in FIG. 4.

The memory 402 is a non-transitory computer-readable storage medium provided by the present disclosure. Wherein, the memory stores instructions executable by at least one processor, so that the at least one processor executes the data query method provided in the present disclosure. The non-transitory computer-readable storage medium of the present disclosure stores computer instructions, which are used to cause a computer to execute the data query method provided by the present disclosure.

The memory 402 is a non-transitory computer-readable storage medium and can be used to store non-transitory software programs, non-transitory computer executable programs and modules, such as program instructions/modules corresponding to the data query method in the embodiments of the present disclosure (for example, the calculating unit 301, the obtaining unit 302, the first comparing unit 303 and the second comparing unit 304 as shown in FIG. 6). The processor 401 executes various functional applications and data processing of the server, i.e., implements the data query method stated in the above method embodiments, by running the non-transitory software programs, instructions and modules stored in the memory 402.

The memory 402 may include a storage program region and a storage data region, wherein the storage program region may store an operating system and an application program needed by at least one function; the storage data region may store data created according to the use of the electronic device for implementing the data query method according to the embodiments of the present disclosure. In addition, the memory 402 may include a high-speed random access memory, and may also include a non-transitory memory, such as at least one magnetic disk storage device, a flash memory device, or other non-transitory solid-state storage device. In some embodiments, the memory 402 may optionally include a memory remotely arranged relative to the processor 401, and these remote memories may be connected to the electronic device for implementing the data query method according to embodiments of the present disclosure through a network. Examples of the above network include, but are not limited to, the Internet, an intranet, a local area network, a mobile communication network, and combinations thereof.

The electronic device for the data query method may further include an input device 403 and an output device 404. The processor 401, the memory 402, the input device 403 and the output device 404 may be connected through a bus or in other manners. In FIG. 9, the connection through the bus is taken as an example.

The input device 403 may receive inputted numeric or character information and generate key signal inputs related to user settings and function control of the electronic device for the data query method, and may be an input device such as a touch screen, keypad, mouse, trackpad, touchpad, pointing stick, one or more mouse buttons, trackball and joystick. The output device 404 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

In the technical solution according to the present disclosure, after the data units corresponding to the hash code and the brief information of the content to be queried are obtained, the brief information is compared one time in parallel with plurality of brief information in the data units to determine whether they are the same. When there is the same brief information as the brief information of the content to be queried in the data unit, determination is made as to whether the content to be queried is stored in the data units according to the determination of whether the content to be queried is the same as the stored content of the same brief information existing in the data unit. The lookup efficiency and speed are improved in the parallel query manner. When query is made for keys in the separate chaining hash table according to the embodiment of the present disclosure, it is unnecessary to perform costly one-by-one sequential lookup and content matching for the separate chaining structure, thereby improving the lookup efficiency and speed and saving the costs.

In addition, according to the technical solution provided by the present disclosure, the efficiency and speed of looking up the keys in the separate chaining hash table are improved in the parallel query manner by adding each of the hash buckets of the separate chaining hash table a brief information sequence, including the brief information respectively corresponding to the keys in the data block of the hash bucket, and it is unnecessary to perform costly one-by-one sequential lookup and content matching for the separate chaining structure, thereby saving the costs.

In addition, with the technical solution according to the present disclosure being employed, the hash code and corresponding hash bucket and brief information are obtained based on the same hash algorithm and the key to be queried, which can save the computing resources and improving the computing efficiency.

In addition, according to the technical solution provided by the present disclosure, a Single Instruction Multiple Data (SIMD) instruction is used to compare in parallel the brief information of the hash code and the plurality of brief information in the brief information sequence in the corresponding hash bucket to determine whether they are the same, and the parallel computing capability of the SIMD instruction is sufficiently used to improve the lookup efficiency and speed of the separate chaining structure.

In addition, according to the technical solution provided by the present disclosure, the size of the brief information sequence is an integer multiple of 8, and the size of the respective brief information in the brief information sequence is one byte, so that it is possible to further make full of the parallel computing capability of the SIMD instruction, save the computing resources and improve the computing efficiency.

In addition, according to the technical solution provided by the present disclosure, the data block pointers, the data blocks and the brief information sequences in any L hash buckets in the separate chaining hash table are respectively merged and stored correspondingly, thereby reducing the storage overhead and improving the storage efficiency.

In addition, according to the technical solution provided by the present disclosure, regarding the read-only separate chaining hash table, the hash bucket further comprises a data block index. The data blocks and brief information sequences of all hash buckets in the read-only separate chaining hash table are respectively merged correspondingly into a data block and a brief information sequence stored in fixed-size blocks and in a sequence manner, which can further reduce the storage space to be used, and greatly improve the storage efficiency.

In addition, according to the technical solution provided by the present disclosure, the brief information sequence and the data block are stored in grades. The brief information sequence in the hash bucket is stored in the first storage unit, and the data block in the hash bucket is stored in the second storage unit. This can reduce the storage cost while ensuring the query performance.

In addition, according to the technical solution provided by the present disclosure, after the data of the hash buckets are merged, the separate chaining hash table has a stable performance at a low conflict rate and a high conflict rate in a certain range (an average conflict rate does not exceed the width of a parallel instruction such as the SIMD instruction), and the storage space of the hash buckets may be saved sufficiently.

## Claims

1. A computer-implemented data query method, **characterized in that** the method comprises:
obtaining (101) a hash code of content to be queried;
obtaining (102) data units corresponding to the hash code and brief information of the content to be queried; wherein each of the data units is used to store content having a same hash code;
comparing (103), in parallel, the brief information with a plurality of brief information in the data units to determine whether they are the same;
according to the content to be queried and stored content which is stored in the data units and has the same brief information as the content to be queried, determining (104) whether the content to be queried is stored in the data units,
wherein the content to be queried and the stored content are a key respectively;
the data units are hash buckets in a separate chaining hash table;
wherein each of the hash buckets comprises a data block and a brief information sequence which is implemented with an array structure, the brief information sequence comprising the brief information respectively corresponding to respective stored contents in the data block,
wherein the obtaining (102) data units corresponding to the hash code and brief information of the content to be queried comprises:
obtaining only those hash buckets corresponding to the hash code and the brief information of the key to be queried , based on the key to be queried and a preset hash algorithm employed to obtain the hash code of the key to be queried, wherein high N bits of the hash code are taken as the brief information of the key to be queried, where N is an integer greater than 0,
wherein the comparing (103), in parallel, the brief information with a plurality of brief information in the data units to determine whether they are the same comprises:
using a Single Instruction Multiple Data (SIMD) instruction to compare, in parallel, the brief information of the key to be queried with the plurality of brief information in the brief information sequence to determine whether they are the same.

2. The method according to claim 1, wherein the obtaining hash buckets corresponding to the hash code based on the key to be queried and a preset hash algorithm employed to obtain the hash code of the key to be queried comprises:
using the hash code to modulo a total number of hash buckets included in the separate chaining hash table to obtain a bucket ID of the hash bucket corresponding to the hash code to obtain the hash bucket identified by the bucket ID.

3. The method according to claim 1, wherein the data structure of the data block comprises any of the following: listed link, dynamic array, static array, skip list, queue, stack, tree, graph and hash table.

4. The method according to claim 1, wherein a size of the brief information sequence is an integer multiple of 8;
a size of each element in the brief information sequence is one byte.

5. The method according to any of claims 1-4, wherein the hash bucket further comprises a data block pointer;
the data block pointers, the data blocks and the brief information sequences of any L hash buckets in the separate chaining hash table are respectively merged and stored correspondingly, where a value of L is an integer greater than 0 and less than the total number M of the hash buckets included in the separate chaining hash table.

6. The method according to any of claims 1-4, wherein the separate chaining hash table is a read-only separate chaining hash table, and the hash bucket further comprises a data block index;
the data blocks and brief information sequences of all hash buckets in the read-only separate chaining hash table are respectively merged correspondingly into a data block and a brief information sequence which are stored in fixed-size blocks and in a sequence manner.

7. The method according to claim 6, wherein the comparing (103), in parallel, the brief information with a plurality of brief information in the data units to determine whether they are the same comprises:
selecting a preset number of brief information in the brief information sequence in the corresponding hash bucket as the current brief information, and comparing the brief information of the key to be queried with the current brief information in parallel to determine whether they are the same;
if there is not the same element as the brief information of the key to be queried in the current brief information, select a next preset number of brief information from the brief information sequence in the corresponding hash bucket as the current brief information, and perform the operation of comparing the brief information of the key to be queried with the current brief information in parallel to determine whether they are the same, until there is the same brief information as the brief information of the key to be queried, or next hash bucket of the corresponding hash bucket is read.

8. The method according to any of claims 1-4, wherein the brief information sequence is stored in a first storage unit, and the data block is stored in a second storage unit.

9. The method according to any of claims 1-4, wherein the method further comprises:
performing (201) hash calculation for the key to be stored by using a preset hash algorithm, to obtain a hash code to be stored;
obtaining (202) brief information of the key to be stored and a hash bucket corresponding to the hash code to be stored;
storing (203) the brief information of the key to be stored in a brief information sequence of the hash bucket corresponding to the hash code to be stored, and storing the key to be stored at a position which is in the data block of the hash bucket corresponding to the hash code to be stored and corresponds to the brief information of the key to be stored.

10. A data query apparatus (300), **characterized in that** the apparatus comprises:
a calculating unit (301) configured to obtain a hash code of content to be queried;
an obtaining unit (302) configured to obtain data units corresponding to the hash code and brief information of the content to be queried; wherein each of the data units is used to store content having a same hash code;
a first comparing unit (303) configured to compare, in parallel, the brief information with a plurality of brief information in the data units to determine whether they are the same;
a second comparing unit (304) configured to, according to the content to be queried and stored content which is stored in the data units and has the same brief information as the content to be queried, determine whether the content to be queried is stored in the data unit,
wherein the content to be queried and the stored content are a key respectively;
the data units are hash buckets in a separate chaining hash table;
wherein each of the hash buckets comprises a data block and a brief information sequence which is implemented with an array structure, the brief information sequence comprising the brief information respectively corresponding to respective stored contents in the data block,
the obtaining unit (302) is further configured to obtaining only those hash buckets corresponding to the hash code and the brief information of the key to be queried , based on the key to be queried and a preset hash algorithm employed to obtain the hash code of the key to be queried, wherein high N bits of the hash code are taken as the brief information of the key to be queried, where N is an integer greater than 0, and
the first comparing unit (303) is further configured to use a Single Instruction Multiple Data (SIMD) instruction to compare, in parallel, the brief information of the key to be queried with the plurality of brief information in the brief information sequence to determine whether they are the same.

11. A non-transitory computer-readable storage medium storing computer instructions therein, wherein the computer instructions are used to cause the computer to perform the method according to any of claims 1-9.

## Patentansprüche

1. Computerimplementiertes Datenabfrageverfahren, **dadurch gekennzeichnet, dass** das Verfahren umfasst:
Erfassen (101) eines Hash-Codes von abzufragendem Inhalt;
Erfassen (102) von Dateneinheiten, die dem Hash-Code entsprechen, und
Kurzinformationen zu dem abzufragenden Inhalt; wobei jede der Dateneinheiten dazu verwendet wird, Inhalt mit einem gleichen Hash-Code zu speichern;
paralleles Vergleichen (103) der Kurzinformationen mit einer Vielzahl von Kurzinformationen in den Dateneinheiten, um festzustellen, ob diese gleich sind;
gemäß dem abzufragenden Inhalt und gespeicherten Inhalt, der in den Dateneinheiten gespeichert ist und die gleichen Kurzinformationen wie der abzufragende Inhalt hat, Bestimmen (104), ob der abzufragende Inhalt in den Dateneinheiten gespeichert ist,
wobei der abzufragende Inhalt und der gespeicherte Inhalt jeweils ein Schlüssel sind;
wobei die Dateneinheiten Hash-Buckets in einer separaten Verkettungs-Hash-Tabelle sind;
wobei jeder der Hash-Buckets einen Datenblock und eine Kurzinformationssequenz aufweist, die mit einer Array-Struktur implementiert ist, wobei die Kurzinformationssequenz die Kurzinformationen umfasst, die jeweils den jeweiligen gespeicherten Inhalten in dem Datenblock entsprechen,
wobei das Erfassen (102) der Dateneinheiten, die dem Hash-Code entsprechen, und der Kurzinformationen des abzufragenden Inhalts umfasst:
Erfassen nur derjenigen Hash-Buckets, die dem Hash-Code und den Kurzinformationen des abzufragenden Schlüssels entsprechen, basierend auf dem abzufragenden Schlüssel und einem vorgegebenen Hash-Algorithmus, der eingesetzt wird, um den Hash-Code des abzufragenden Schlüssels zu erfassen, wobei die hohen N Bits des Hash-Codes als die Kurzinformationen des abzufragenden Schlüssels verwendet werden, wobei N eine ganze Zahl größer 0 ist,
wobei das parallele Vergleichen (103) der Kurzinformationen mit einer Vielzahl von Kurzinformationen in den Dateneinheiten, um zu bestimmen, ob diese gleich sind, umfasst:
Verwenden einer Instruktion des Typs Single Instruction Multiple Data (SIMD) zum parallelen Vergleichen der Kurzinformationen des abzufragenden Schlüssels mit der Vielzahl von Kurzinformationen in der Kurzinformationssequenz, um zu bestimmen, ob diese gleich sind.

2. Verfahren nach Anspruch 1, wobei das Erfassen von Hash-Buckets, die dem Hash-Code entsprechen, basierend auf dem abzufragenden Schlüssel und einem vorgegebenen Hash-Algorithmus, der eingesetzt wird, um den Hash-Code des abzufragenden Schlüssels zu erfassen, umfasst:
Verwenden des Hash-Codes zum Modulo einer Gesamtzahl der Hash-Buckets, die in der separaten Verkettungs-Hash-Tabelle enthalten sind, um eine Bucket-ID des Hash-Buckets zu erfassen, der dem Hash-Code entspricht, um den mit der Bucket-ID identifizierten Hash-Bucket zu erfassen.

3. Verfahren nach Anspruch 1, wobei die Datenstruktur des Datenblocks eines aus Folgendem umfasst: verkettete Liste, dynamisches Array, statisches Array, Skip-Liste, Warteschlange, Stapel, Baum, Graph und Hash-Tabelle.

4. Verfahren nach Anspruch 1, wobei eine Größe der Kurzinformationssequenz ein ganzzahliges Vielfaches von 8 ist;
wobei eine Größe jedes Elements in der Kurzinformationssequenz ein Byte ist.

5. Verfahren nach einem der Ansprüche 1-4, wobei der Hash-Bucket ferner einen Datenblockzeiger aufweist;
wobei die Datenblockzeiger, die Datenblöcke und die Kurzinformationssequenzen jedes L Hash-Buckets in der separaten Verkettungs-Hash-Tabelle jeweils zusammengeführt und entsprechend gespeichert werden, wobei ein Wert von L eine ganze Zahl größer als 0 und kleiner als die Gesamtzahl M der Hash-Buckets ist, die in der separaten Verkettungs-Hash-Tabelle enthalten sind.

6. Verfahren nach einem der Ansprüche 1-4, wobei die separate Verkettungs-Hash-Tabelle eine schreibgeschützte separate Verkettungs-Hash-Tabelle ist, die ferner einen Datenblockindex aufweist;
wobei die Datenblöcke und die Kurzinformationssequenzen sämtlicher Hash-Buckets in der schreibgeschützten separaten Verkettungs-Hash-Tabelle jeweils entsprechend in einen Datenblock und eine Kurzinformationssequenz zusammengeführt werden, die in Blöcken mit fester Größe und sequenzartig gespeichert werden.

7. Verfahren nach Anspruch 6, wobei das parallele Vergleichen (103) der Kurzinformationen mit einer Vielzahl von Kurzinformationen in den Dateneinheiten, um zu bestimmen, ob diese gleich sind, umfasst:
Auswählen einer vorbestimmten Anzahl von Kurzinformationen in der Kurzinformationssequenz in dem entsprechenden Hash-Bucket als die aktuellen Kurzinformationen, und paralleles Vergleichen der Kurzinformationen des abzufragenden Schlüssels mit den aktuellen Kurzinformationen, um zu bestimmen, ob diese gleich sind;
wenn es nicht das gleiche Element wie die Kurzinformationen des abzufragenden Schlüssels in den aktuellen Kurzinformationen gibt, Auswählen einer nächsten vorbestimmten Anzahl von Kurzinformationen aus der Kurzinformationssequenz in dem entsprechenden Hash-Bucket als die aktuellen Kurzinformationen, und Durchführen des Vorgangs des parallelen Vergleichens der Kurzinformationen des abzufragenden Schlüssels mit den aktuellen Kurzinformationen, um zu bestimmen, ob diese gleich sind, bis die gleichen Kurzinformationen wie die Kurzinformationen des abzufragenden Schlüssels vorliegen oder der nächste Hash-Bucket des entsprechenden Hash-Buckets gelesen wird.

8. Verfahren nach einem der Ansprüche 1-4, wobei die Kurzinformationssequenz in einer ersten Speichereinheit gespeichert wird und der Datenblock in einer zweiten Speichereinheit gespeichert wird.

9. Verfahren nach einem der Ansprüche 1-4, wobei das Verfahren ferner umfasst:
Durchführen (201) einer Hash-Berechnung für den zu speichernden Schlüssel unter Verwendung eines Hash-Algorithmus, um einen Hash-Code zu erfassen, der gespeichert werden soll;
Erfassen (202) von Kurzinformationen des zu speichernden Schlüssels und eines Hash-Buckets, der dem zu speichernden Hash-Code entspricht;
Speichern (203) der Kurzinformationen des zu speichernden Schlüssels in einer Kurzinformationssequenz des Hash-Buckets, der dem zu speichernden Hash-Code entspricht, und Speichern des zu speichernden Schlüssels an einer Position, die in dem Datenblock des Hash-Buckets ist, der dem zu speichernden Hash-Code entspricht, und die den Kurzinformationen des zu speichernden Schlüssels entspricht.

10. Datenabfragevorrichtung (300), **dadurch gekennzeichnet, dass** die Vorrichtung aufweist:
eine Berechnungseinheit (301), die dazu ausgebildet ist, einen Hash-Code von abzufragendem Inhalt zu erfassen;
eine Erfassungseinheit (302), die dazu ausgebildet ist, Dateneinheiten, die dem Hash-Code entsprechen, und Kurzinformationen des abzufragenden Inhalts zu erfassen; wobei jede der Dateneinheiten dazu verwendet wird, Inhalt mit einem gleichen Hash-Code zu speichern;
eine erste Vergleichseinheit (303), die dazu ausgebildet ist, die Kurzinformationen mit einer Vielzahl von Kurzinformationen in den Dateneinheiten parallel zu vergleichen, um festzustellen, ob diese gleich sind;
eine zweite Vergleichseinheit (304), die dazu ausgebildet ist, gemäß dem abzufragenden Inhalt und gespeicherten Inhalt, der in den Dateneinheiten gespeichert ist und die gleichen Kurzinformationen wie der abzufragende Inhalt hat, zu bestimmen, ob der abzufragende Inhalt in der Dateneinheit gespeichert ist,
wobei der abzufragende Inhalt und der gespeicherte Inhalt jeweils ein Schlüssel sind;
wobei die Dateneinheiten Hash-Buckets in einer separaten Verkettungs-Hash-Tabelle sind;
wobei jeder der Hash-Buckets einen Datenblock und eine Kurzinformationssequenz aufweist, die mit einer Array-Struktur implementiert ist, wobei die Kurzinformationssequenz die Kurzinformationen umfasst, die jeweils den jeweiligen gespeicherten Inhalten in dem Datenblock entsprechen,
wobei die Erfassungseinheit (302) ferner dazu ausgebildet ist, nur diejenigen Hash-Buckets zu erfassen, die dem Hash-Code und den Kurzinformationen des abzufragenden Schlüssels entsprechen, basierend auf dem abzufragenden Schlüssel und einem vorgegebenen Hash-Algorithmus, der eingesetzt wird, um den Hash-Code des abzufragenden Schlüssels zu erfassen, wobei die hohen N Bits des Hash-Codes als die Kurzinformationen des abzufragenden Schlüssels verwendet werden, wobei N eine ganze Zahl größer 0 ist, und
wobei die erste Vergleichseinheit (303) ferner dazu ausgebildet ist, eine Instruktion des Typs Single Instruction Multiple Data (SIMD) zu verwenden, zum parallelen Vergleichen der Kurzinformationen des abzufragenden Schlüssels mit der Vielzahl von Kurzinformationen in der Kurzinformationssequenz, um zu bestimmen, ob diese gleich sind.

11. Nichtflüchtiges computerlesbares Speichermedium, auf dem Computerinstruktionen gespeichert sind, wobei die Computerinstruktionen verwendet werden, um zu bewirken, dass der Computer das Verfahren nach einem der Ansprüche 1-9 durchführt.

## Revendications

1. Procédé d'interrogation de données implémenté par ordinateur, **caractérisé en ce que** le procédé comprend :
l'obtention (101) d'un code de hachage d'un contenu à interroger ;
l'obtention (102) d'unités de données correspondant au code de hachage et d'informations succinctes du contenu à interroger ; dans lequel chacune des unités de données est utilisée pour stocker un contenu ayant un même code de hachage ;
la comparaison (103), en parallèle, des informations succinctes à une pluralité d'informations succinctes dans les unités de données pour déterminer si elles sont identiques ;
selon le contenu à interroger et le contenu stocké qui est stocké dans les unités de données et a les mêmes informations succinctes que le contenu à interroger, le fait de déterminer (104) si le contenu à interroger est stocké dans les unités de données,
dans lequel le contenu à interroger et le contenu stocké sont une clé respectivement ;
les unités de données sont des compartiments de hachage dans une table de hachage de chaînage indépendante ;
dans lequel chacun des compartiments de hachage comprend un bloc de données et une séquence d'informations succinctes qui est implémentée avec une structure de réseau, la séquence d'informations succinctes comprenant les informations succinctes correspondant respectivement aux contenus stockés respectifs dans le bloc de données,
dans lequel l'obtention (102) d'unités de données correspondant au code de hachage et aux informations succinctes du contenu à interroger comprend :
l'obtention uniquement de ces compartiments de hachage correspondant au code de hachage et aux informations succinctes de la clé à interroger, en fonction de la clé à interroger et d'un algorithme de hachage prédéfini employé pour obtenir le code de hachage de la clé à interroger, dans lequel N bits hauts du code de hachage sont pris en guise d'informations succinctes de la clé à interroger, où N est un nombre entier supérieur à 0,
dans lequel la comparaison (103), en parallèle, des informations succinctes à une pluralité d'informations succinctes dans les unités de données pour déterminer si elles sont identiques comprend :
l'utilisation d'une instruction de type données multiples à instruction unique (SIMD) pour comparer, en parallèle, les informations succinctes de la clé à interroger à la pluralité d'informations succinctes dans la séquence d'informations succinctes pour déterminer si elles sont identiques.

2. Procédé selon la revendication 1, dans lequel l'obtention de compartiments de hachage correspondant au code de hachage en fonction de la clé à interroger et d'un algorithme de hachage prédéfini employé pour obtenir le code de hachage de la clé à interroger comprend :
l'utilisation du code de hachage pour effectuer une opération modulo d'un nombre total de compartiments de hachage inclus dans la table de hachage de chaînage indépendante pour obtenir un ID de compartiment du compartiment de hachage correspondant au code de hachage pour obtenir le compartiment de hachage identifié par l'ID de compartiment.

3. Procédé selon la revendication 1, dans lequel la structure de données du bloc de données comprend l'un quelconque des suivants : lien énuméré, réseau dynamique, réseau statique, liste d'omissions, file d'attente, pile, arbre, graphe et table de hachage.

4. Procédé selon la revendication 1, dans lequel une taille de la séquence d'informations succinctes est un multiple entier de 8 ;
une taille de chaque élément dans les séquences d'informations succinctes est d'un octet.

5. Procédé selon l'une quelconque des revendications 1 à 4, dans lequel le compartiment de hachage comprend en outre un pointeur de bloc de données ;
les pointeurs de bloc de données, les blocs de données et les séquences d'informations succinctes de L compartiments de hachage quelconques dans la table de hachage de chaînage indépendante sont respectivement fusionnés et stockés en conséquence, où une valeur de L est un nombre entier supérieur à 0 et inférieur au nombre total M des compartiments de hachage inclus dans la table de hachage de chaînage indépendante.

6. Procédé selon l'une quelconque des revendications 1 à 4, dans lequel la table de hachage de chaînage indépendante est une table de hachage de chaînage indépendante en lecture seule, et le compartiment de hachage comprend en outre un indice de bloc de données ;
les blocs de données et séquences d'informations succinctes de tous les compartiments de hachage dans la table de hachage de chaînage indépendante en lecture seule sont respectivement fusionnés en conséquence en un bloc de données et une séquence d'informations succinctes qui sont stockés dans des blocs de taille fixe et à la manière d'une séquence.

7. Procédé selon la revendication 6, dans lequel la comparaison (103), en parallèle, des informations succinctes à une pluralité d'informations succinctes dans les unités de données pour déterminer si elles sont identiques comprend :
la sélection d'un nombre prédéfini d'informations succinctes dans la séquence d'informations succinctes dans le compartiment de hachage correspondant en guise d'informations succinctes actuelles, et la comparaison des informations succinctes de la clé à interroger aux informations succinctes actuelles en parallèle pour déterminer si elles sont identiques ;
s'il n'y a pas le même élément que les informations succinctes de la clé à interroger dans les informations succinctes actuelles, sélectionner un nombre prédéfini suivant d'informations succinctes parmi la séquence d'informations succinctes dans le compartiment de hachage correspondant en guise d'informations succinctes actuelles, et mettre en oeuvre l'opération de comparaison des informations succinctes de la clé à interroger aux informations succinctes actuelles en parallèle pour déterminer si elles sont identiques, jusqu'à ce qu'il y ait les mêmes informations succinctes que les informations succinctes de la clé à interroger, ou un compartiment de hachage suivant du compartiment de hachage correspondant est lu.

8. Procédé selon l'une quelconque des revendications 1 à 4, dans lequel la séquence d'informations succinctes est stockée dans une première unité de stockage, et le bloc de données est stocké dans une seconde unité de stockage.

9. Procédé selon l'une quelconque des revendications 1 à 4, le procédé comprenant en outre :
la mise en oeuvre (201) d'un calcul de hachage pour la clé à stocker en utilisant un algorithme de hachage prédéfini, pour obtenir un code de hachage à stocker ;
l'obtention (202) d'informations succinctes de la clé à stocker et d'un compartiment de hachage correspondant au code de hachage à stocker ;
le stockage (203) des informations succinctes de la clé à stocker dans une séquence d'informations succinctes du compartiment de hachage correspondant au code de hachage à stocker, et le stockage de la clé à stocker au niveau d'une position qui est dans le bloc de données du compartiment de hachage correspondant au code de hachage à stocker et correspond aux informations succinctes de la clé à stocker.

10. Appareil d'interrogation de données (300), **caractérisé en ce que** l'appareil comprend :
une unité de calcul (301) configurée pour obtenir un code de hachage d'un contenu à interroger ;
une unité d'obtention (302) configurée pour obtenir des unités de données correspondant au code de hachage et des informations succinctes du contenu à interroger ; dans lequel chacune des unités de données est utilisée pour stocker un contenu ayant un même code de hachage ;
une première unité de comparaison (303) configurée pour comparer, en parallèle, les informations succinctes à une pluralité d'informations succinctes dans les unités de données pour déterminer si elles sont identiques ;
une seconde unité de comparaison (304) configurée pour, selon le contenu à interroger et le contenu stocké qui est stocké dans les unités de données et a les mêmes informations succinctes que le contenu à interroger, déterminer si le contenu à interroger est stocké dans l'unité de données,
dans lequel le contenu à interroger et le contenu stocké sont une clé respectivement ;
les unités de données sont des compartiments de hachage dans une table de hachage de chaînage indépendante ;
dans lequel chacun des compartiments de hachage comprend un bloc de données et une séquence d'informations succinctes qui est implémentée avec une structure de réseau, la séquence d'informations succinctes comprenant les informations succinctes correspondant respectivement aux contenus stockés respectifs dans le bloc de données,
l'unité d'obtention (302) est configurée en outre pour obtenir uniquement ces compartiments de hachage correspondant au code de hachage et aux informations succinctes de la clé à interroger, en fonction de la clé à interroger et d'un algorithme de hachage prédéfini employé pour obtenir le code de hachage de la clé à interroger, dans lequel N bits hauts du code de hachage sont pris en guise d'informations succinctes de la clé à interroger, où N est un nombre entier supérieur à 0, et
la première unité de comparaison (303) est configurée en outre pour utiliser une instruction de type données multiples à instruction unique (SIMD) pour comparer, en parallèle, les informations succinctes de la clé à interroger à la pluralité d'informations succinctes dans la séquence d'informations succinctes pour déterminer si elles sont identiques.

11. Support de stockage non transitoire lisible par ordinateur stockant des instructions d'ordinateur en son sein, les instructions d'ordinateur étant utilisées pour amener l'ordinateur à mettre en oeuvre le procédé selon l'une quelconque des revendications 1 à 9.
